# EUROPÄISCHE PATENTSCHRIFT

(11) **EP 1 695 436 B1**
(45) Veröffentlichungstag und Bekanntmachung des Hinweises auf die Patenterteilung: **12.12.2007**
(21) Anmeldenummer: 04804733.6
(22) Anmeldetag: 08.12.2004
(51) Int. Cl.: H02P 6/14

(54) **ANSTEUERUNG EINES GLEICHSTROMMOTORS**
CONTROLLING OF A DIRECT-CURRENT MOTOR
REGULATION D'UN MOTEUR A COURANT CONTINU

(30) Priorität: 09.12.2003 DE 10357503
(43) Veröffentlichungstag der Anmeldung: 30.08.2006
(73) Patentinhaber: BSH Bosch und Siemens Hausgeräte GmbH, 81739 München (DE)
(72) Erfinder: DE FILIPPIS, Pietro, I-20124 Milano (IT); HOCHHAUSEN, Ralf, 85051 Ingolstadt (DE); SEYFARTH, Jörg, 93057 Regensburg (DE)
(86) Internationale Anmeldenummer: PCT/EP2004/053355
(87) Internationale Veröffentlichungsnummer: WO 2005/060086

(56) Entgegenhaltungen:
- EP-A- 0 128 796
- US-A- 4 259 620
- PATENT ABSTRACTS OF JAPAN Bd. 010, Nr. 337 (E-454), 14. November 1986 (1986-11-14) & JP 61 139296 A (TOYO ELECTRIC MFG CO LTD), 26. Juni 1986 (1986-06-26)

## Beschreibung

Die vorliegende Erfindung betrifft ein Verfahren zum Ansteuern eines bürstenlosen Gleichstrommotors und einen zur Durchführung des Verfahrens geeigneten Wechselrichter.

Der Stator eines solchen Motors erzeugt ein rotierendes Magnetfeld, in welchem die Magnete des Rotors sich auszurichten versuchen und so eine Drehung des Rotors antreiben. Um einen möglichst hohen elektrischen Wirkungsgrad eines solchen Motors zu erreichen, wäre es an sich wünschenswert, drei Wicklungen des Stators mit jeweils um eine Drittelperiode gegeneinander phasenverschobenen sinusförmigen Strömen zu beaufschlagten. Da von der Frequenz der Ströme die Drehgeschwindigkeit des Motors abhängt, müssen diese Ströme mit variablen Frequenzen bereitgestellt werden können. Um Antriebsströme mit willkürlich wählbarer Frequenz bereitzustellen, werden üblicherweise Wechselrichter eingesetzt, die die Wicklungen des Motors getastet mit einer festen Versorgungsspannung beaufschlagten, wobei die Tastfrequenz der Schalter wesentlich höher als die Drehfrequenz ist. Je besser mit einem solchen Wechselrichter eine Sinusform des Versorgungsstroms approximiert werden soll, um so höher ist die erforderliche Frequenz der Schaltvorgänge in den Schaltern des Wechselrichters. Die Verlustleistung der Schalter wächst mit der Schaltfrequenz. Eine zu hohe Schaltfrequenz kann daher zur Überhitzung und Zerstörung der Schalter führen. Der erreichbare Wirkungsgrad des Motors ist ein Kompromiss zwischen dem Wunsch nach sinusförmigen Versorgungsströmen für die Motorwicklungen einerseits und dem Bedürfnis nach einer niedrigen Schaltfrequenz und entsprechend geringen Verlusten im Wechselrichter andererseits.

Ein verbreitetes Ansteuerverfahren verwendet sechs sich periodisch abwechselnde Schaltzustände von jeweils einer Sechstelperiode Dauer, bei dem jede Wicklung jeweils während eines Zustandes stromlos, dann zwei Zustände lang in einer ersten Richtung bestromt, dann wieder einen Zustand lang stromlos und schließlich zwei weitere Zustände lang mit entgegengesetztem Vorzeichen bestromt ist und die Ströme der drei Wicklungen jeweils um eine Drittelperiode phasenverschoben sind. Dieses Schema ist zwar einfach zu steuern, doch ist von drei Wicklungen des Motors ständig eine stromlos, so dass sie zur Drehmomentbildung des Motors nicht beiträgt. Die Wicklung und die in ihnen fließenden Stromstärken müssen also so ausgelegt sein, dass zwei bestromte Wicklungen ausreichen, um ein benötigtes Drehmoment zu liefern. Ein Ansteuerverfahren, mit dem jederzeit alle drei Wicklungen bestromt werden könnten, würde es erlauben, bei gleichbleibendem Drehmoment die Windungszahl der Wicklungen zu reduzieren und dadurch nicht nur Kosten, Gewicht und Größe einzusparen, sondern auch ohmsche Verluste zu reduzieren und den Wirkungsgrad zu verbessern.

Aufgabe der Erfindung ist, ein solches verbessertes Ansteuerverfahren zu schaffen.

Die Aufgabe wird gelöst durch ein Verfahren zum Ansteuern eines dreiphasigen Gleichstrommotors, bei dem drei erste Schaltzustände zyklisch wiederholt werden, wobei in jedem der drei ersten Schaltzustände eine jeweils andere der drei Phasen periodisch zwischen einer ersten und einer zweiten Eingangsspannung umgeschaltet wird, während die zwei anderen Phasen durchgehend mit der ersten Eingangsspannung beschaltet sind. Während die eine Phase mit der zweiten Eingangsspannung beschaltet ist, fließt ein Strom jeweils in einer Reihenschaltung durch diese eine Phase und die zwei anderen, zueinander parallelen Phasen, so dass alle drei Phasen Strom führen und zum Drehmoment des Motors beitragen.

Ein gleichmäßiger Lauf des Motors ergibt sich, wenn zwischen zwei ersten Schaltzuständen jeweils ein zweiter Schaltzustand eingefügt wird, in welchem eine der drei Phasen periodisch zwischen der ersten und der zweiten Eingangsspannung umgeschaltet wird, während die zwei anderen Phasen durchgehend mit der zweiten Eingangsspannung beschaltet sind. Auch hier sind, wenn die eine Phase auf die erste Eingangsspannung geschaltet ist, alle drei Phasen stromdurchflossen.

Ein kontinuierlich rundlaufender Raumzeiger ergibt sich, wenn in jedem zweiten Schaltzustand diejenige Phase periodisch umgeschaltet wird, die weder in dem vorhergehenden noch in dem nachfolgenden ersten Schaltzustand periodisch umgeschaltet wird.

Für eine gleichmäßige Motorleistung ist es ferner wünschenswert, dass der Anteil der Zeit, in der in jedem ersten Schaltzustand die jeweils periodisch umgeschaltete Phase mit der zweiten Eingangsspannung beschaltet wird, an der Dauer dieses ersten Schaltzustandes gleich dem Anteil der Zeit, in der die periodisch umgeschaltete Phase mit der ersten Eingangsspannung beschaltet wird, an der Dauer jedes zweiten Schaltzustandes ist.

Dieser Zeitanteil ist zweckmäßigerweise in jedem ersten und/oder zweiten Schaltzustand proportional zu einer Last des Gleichstrommotors geregelt.

Wenn zum Ansteuern des Gleichstrommotors ein Wechselrichter verwendet wird, der zu jeder Phase des Motors eine zwischen einen die erste Eingangsspannung führende Klemme und die betreffende Motorphase platzierten ersten Schalter und einen zwischen die betreffende Motorphase und eine die zweite Eingangsspannung führende zweite Klemme platzierten zweiten Schalter aufweist, so kann in jedem er sten Schaltzustand der erste Schalter der periodisch umgeschalteten Phase offen bleiben, während der zweite Schalter dieser Phase periodisch umgeschaltet wird. Im ersten Schalter fallen somit keine Umschaltverluste an. Entsprechend kann in jedem zweiten Schaltzustand der zweite Schalter der periodisch umgeschalteten Phase offen bleiben, während der erste Schalter dieser Phase periodisch umgeschaltet wird.

Ein erfindungsgemäßer Wechselrichter ist mit einer Steuerschaltung zum Ansteuern seiner Schalter gemäß einem Verfahren wie oben definiert ausgestattet.

Weitere Merkmale und Vorteile der Erfindung ergeben sich aus der nachfolgenden Beschreibung von Ausführungsbeispielen mit Bezug auf die beigefügten Figuren. Es zeigen:

Fig. 1 ein Blockdiagramm eines Wechselrichters, mit dem die vorliegende Erfindung ausführbar ist;

Fig. 2 ein Zeitdiagramm, welches die Zustände der Schalter des Wechselrichters sowie die Spannungen und Stromflussrichtungen in den Phasen des Motors für die verschiedenen Zustände des erfindungsgemäßen Verfahrens veranschaulicht; und

Fig. 3 den simulierten zeitlichen Verlauf des Stromsignals einer Phase eines erfindungsgemäß angesteuerten Elektromotors.

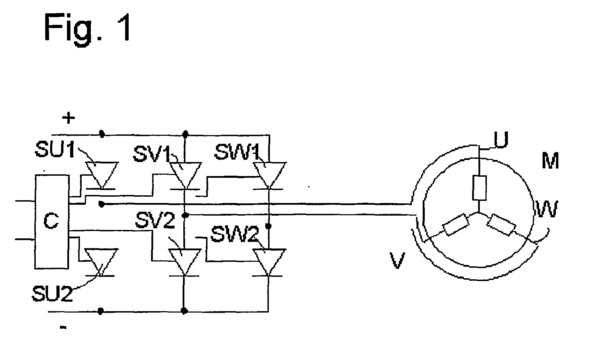

Der in Fig. 1 gezeigte Wechselrichter umfasst sechs Schalter SU1, SV1, SW1, SU2, SV2, SW2, von denen jeweils die Schalter SU1, SV1, SW1 zwischen einer positiven Versorgungsklemme (+) und einer Phase U, V bzw. W eines dreiphasigen bürstenlosen Gleichstrommotors M angeordnet sind und die Schalter SU2, SV2, SW2 jeweils zwischen einer dieser drei Phasen und einer negativen Versorgungsklemme (-) angeordnet sind. Bei den Schaltern kann es sich in an sich bekannter Weise um IGBTs mit einer parallel geschalteten Freilaufdiode handeln.

Eine Steuerschaltung C erzeugt Ansteuersequenzen zum Öffnen und Schließen der Schalter SU1 bis SW2 in Abhängigkeit von zwei Eingangssignalen, die eine gewünschte Drehfrequenz des Magnetfeldes in dem Gleichstrommotor M bzw. eine gewünschte Leistung des Motors bezeichnen.

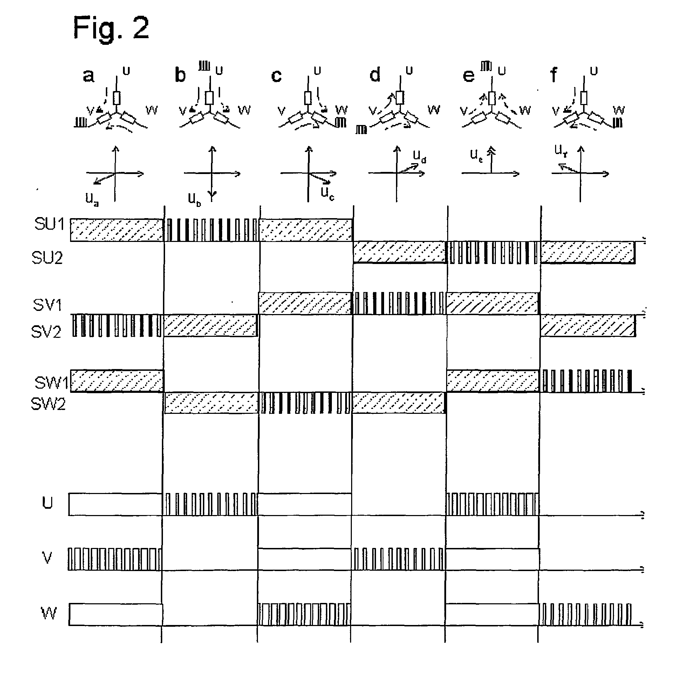

Die Steuerschaltung C wiederholt zyklisch eine Sequenz von sechs Schaltzuständen. In dem ersten Schaltzustand, in Fig. 2 mit a bezeichnet, sind die mit der positiven Klemme verbundenen Schalter SU1, SW1 geschlossen, und die jeweils komplementären Schalter SU2, SW2 sind offen, so dass an den Phasen U, W das positive Versorgungspotential anliegt. Der Schalter SV1 ist ebenfalls offen, und der Schalter SV2 wird abwechselnd geöffnet und geschlossen, wobei der Anteil a der Zeit, in der der Schalter SV2 geschlossen ist, an der Dauer des ersten Schaltzustands a von der Steuerschaltung C proportional zur verlangten Leistung des Motors M gewählt wird. Wie die Pfeile in der schematischen Darstellung des Motors im Zustand a zeigen, fließt Strom einerseits durch die Phasen U, V und W, V des Motors. Alle drei Phasen tragen somit zun Raumzeiger Uₐ des Magnetfeldes bei, wobei die Beiträge der Phasen U, V sich zu einem Beitrag parallel zu dem der Phase V überlagern.

Im anschließenden Schaltzustand b ist der Schalter SU1 mit dem Tastverhältnis geschlossen, die Schalter SV2 und SW2 sind geschlossen und die Schalter SU2, SV1, SW1 sind offen. Die Phasen V, W liegen auf der niedrigen Versorgungsspannung, und die Phase U nimmt mit dem Tastverhältnis α das hohe Versorgungspotential an. Der Raumzeiger U_{b} ist um 60° im Gegenuhrzeigersinn gedreht.

Allgemein sind in den Schaltzuständen a, c, e jeweils bei zwei Phasen die mit dem hohen Versorgungspotential verbindenden Schalter geschlossen und die mit dem niedrigen Versorgungspotential verbindenden Schalter offen, und bei der dritten Phase ist der mit dem hohen Versorgungspotential verbindende Schalter offen und der mit dem niedrigen Versorgungspotential verbindende getastet. Es gibt zwei verschiedene Möglichkeiten für eine Reihenfolge dieser drei Schaltzustände a, c, und e; sie entsprechen den zwei entgegengesetzten Drehrichtungen des Motors. Bei jedem dazwischen liegenden Schaltzustand b, d oder f sind bei jeweils zweien der Phasen U, V, W die mit dem niedrigen Versorgungspotential verbindenden Schalter geschlossen und die mit dem hohen Versorgungspotential verbindenden offen, und bei der dritten Phase ist der mit dem niedrigen Versorgungspotential verbindende Schalter offen und der mit dem hohen Versorgungspotential verbindende getastet. Die getastete Phase ist dabei jeweils diejenige Phase, die weder im unmittelbar vorhergehenden noch in dem unmittelbar nachfolgenden Schaltzustand getastet ist. So ergibt sich eine gleichmäßige Rotation des Raumzeigers von 60° von einem Schaltzustand zum nächsten.

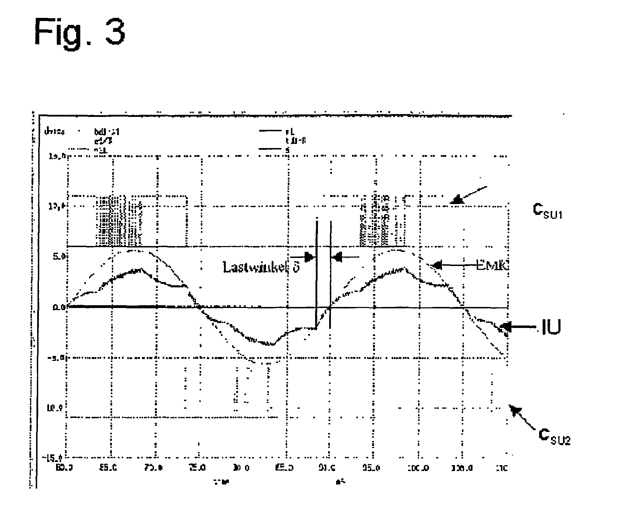

Fig. 3 zeigt für eine Phase des Motors, beispielsweise die Phase U, das Ergebnis einer Simulationsberechnung des Phasenstroms als Funktion der Zeit, dargestellt als Kurve IU, zusammen mit Ansteuersignalen C_{SU1} und C_{SU2} für die zwei die Phase U versorgenden Schalter SU1, SU2 bei einem Lastwinkel 8 zwischen der Phase des Ansteuersignals C_{SU1} und der elektromotorischen Kraft EMK des Motors.

## Patentansprüche

1. Verfahren zum Ansteuern eines dreiphasigen Gleichstrommotors (11) mittels eines Wechselrichters, bei dem eine Sequenz von sechs Schaltzuständen (a, b, c, d, e; f) des Wechselrichters zyklisch wiederholt wird, wobei eine erste Versorgungsklemme eine erste Eingangsspannung (+) und eine zweite Versorgungsklemme eine zweite Eingangsspannung (-) führt, wobei zwischen jeder Phase (U, V, W) des Motors (11) und der ersten Versorgungsklemme jeweils ein erster Schalter (SU1, SV1, SW1) des Wechselrichters und zwischen jeder Phase (U, V, W) des Motors (11) und der zweiten Versorgungsklemme jeweils ein zweiter Schalter (SU2, SV2, SW2) des Wechselrichters vorgesehen ist, wobei in jedem von drei ersten Schaltzuständen (a, c, e) für eine der drei Phasen (U,V,W) des Gleichstrommotors (M) der zugehörige zweite Schalter periodisch abwechselnd geöffnet und geschlossen wird und der zugehörige erste Schalter geöffnet ist, während für die zwei anderen Phasen die zugehörigen ersten Schalter durchgehend geschlossen und die zugehörigen zweiten Schalter durchgehend geöffnet sind, und wobei zwischen zwei ersten Schaltzuständen (a, c, e) jeweils ein zweiter Schaltzustand (b, d, f) eingefügt wird, in welchem für eine der drei Phasen (U, V, W) der zugehörige erste Schalter periodisch abwechselnd geöffnet und geschlossen wird und der zugehörige zweite Schalter geöffnet ist, während für die zwei anderen Phasen die zugehörigen zweiten Schalter durchgehend geschlossen und die zugehörigen ersten Schalter durchgehend geöffnet sind.

2. Verfahren nach Anspruch 1, **dadurch gekennzeichnet, dass** in jedem zweiten Schaltzustand (b, d, f) einer der zugehörigen Schalter diejenigen Phase periodisch abwechselnd geöffnet und geschlossen wird, bei der weder in dem vorhergehenden noch in dem nachfolgenden ersten Schaltzustand (a, c, e) einer der zugehörigen Schalter periodisch abwechselnd geöffnet und geschlossen wird.

3. Verfahren nach Anspruch 1 oder 2, **dadurch gekennzeichnet, dass** der Anteil (α) der Zeit, in der der periodisch abwechselnd geöffnete und geschlossene zweite Schalter geschlossen ist, an der Dauer jedes ersten Schaltzustandes (a, c, e) gleich dem Anteil der Zeit, in der der periodisch abwechselnd geöffnete und geschlossene erste Schalter geschlossen ist, an der Dauer jedes zweiten Schaltzustandes (b, d, f) ist.

4. Verfahren nach einem der Ansprüche 1 bis 3, **dadurch gekennzeichnet, dass** in jedem zweiten Schaltzustand (b, d, f) der Anteil (α) der Zeit, in der der periodisch abwechselnd geöffnete und geschlossene erste Schalter geschlossen ist, proportional zu einer Last des Gleichstrommotors (11) geregelt wird.

5. Verfahren nach einem der vorhergehenden Ansprüche, **dadurch gekennzeichnet, dass** in jedem ersten Schaltzustand (a, c, e) der Anteil der Zeit, in der der periodisch abwechselnd geöffnete und geschlossene zweite Schalter geschlossen ist, proportional zu einer Last des Gleichstrommotors (11) geregelt wird.

6. Wechselrichter, **gekennzeichnet durch** eine Steuerschaltung (C), die zum Ansteuern der Schalter (SU1, SV1, SW1, SU2, SV2, SW2) des Wechselrichters gemäß einem Verfahren nach einem der vorhergehenden Ansprüche ausgebildet ist.

## Claims

1. Method for drive control of a three-phase direct current motor (11) by means of an inverter, in which a sequence of six switching states (a, b, c, d, e, f) of the inverter is cyclically repeated, wherein a first supply terminal conducts a first input voltage (+) and a second supply terminal conducts a second input voltage (-), wherein a respective first switch (SU1, SV1, SW1) of the inverter is provided between each phase (U, V, W) of the motor (11) and the first supply terminal and a respective second switch (SU2, SV2, SW2) of the inverter is provided between each phase (U, V,W) of the motor (11) and the second supply terminal, wherein in each of three first switching states (a, c, e) for one of the three phases (U, V, W) of the direct current motor (M) the associated second switch is periodically opened and closed in alternation and the associated first switch is opened, whereas for the two other phases the associated first switch is continuously closed and the associated second switch is continuously open, and wherein inserted between two first switching states (a, c, e) is in each instance a second switching state (b, d, f) in which for one of the three phases (U, V. W) the associated first switch is periodically opened and closed in alternation and the associated second switch is open, whereas for the two other phases the associated second switch is continuously closed and the associated first switch is continuously open.

2. Method according to claim 1, **characterised in that** in each second switching state (b, d, f) of one of the associated switches that phase is periodically opened and closed in alternation in which one of the associated switches is periodically opened and closed in alternation neither in the preceding nor in the succeeding first switching state (a, c, e).

3. Method according to claim 1 or 2, **characterised in that** the proportion (α) of the time in which the second switch, which is periodically opened and closed in alternation, is closed is for the duration of each first switching state (a, c, e) equal to the proportion of time in which the first switch, which is periodically opened and closed in alternation, is closed for the duration of each second switching state (b, d, f).

4. Method according to one of claims 1 to 3, **characterised in that** in each second switching state (b, d, f) the proportion (α) of the time in which the first switch, which is periodically opened and closed in alternation, is closed is regulated to be proportional to a load of the direct current motor (11).

5. Method according to one of the preceding claims, **characterised in that** in each first switching state (a, c, e) the proportion of time in which the second switch, which is periodically opened and closed in alternation, is closed is regulated to be proportional to a load of the direct current motor (11).

6. Inverter, **characterised by** a control circuit (C), which is constructed for control in drive of the switches (SU1, SV1, SW1, SU2, SV2, SW2) of the inverter according to a method in accordance with one of the preceding claims.

## Revendications

1. Procédé de commande d'un moteur triphasé à courant continu (11) au moyen d'un onduleur, dans lequel une séquence de six états de commutation (a, b, c, d, e, f) de l'onduleur est répétée cycliquement, une première borne d'alimentation apportant une première tension d'entrée (+) et une deuxième borne d'alimentation une deuxième tension d'entrée (-), à chaque fois, un premier commutateur (SU1, SV1, SW1) de l'onduleur étant prévu entre chaque phase (U, V, W) du moteur (11) et la première borne d'alimentation et, à chaque fois, un deuxième commutateur (SU2, SV2, SW2) de l'onduleur étant prévu entre chaque phase (U, V, W) du moteur (11) et la deuxième borne d'alimentation, dans lequel, dans chacun de trois premiers états de commutation (a, c, e), le deuxième commutateur associé à l'une des trois phases (U, V, W) du moteur à courant continu (M) est ouvert et fermé périodiquement en alternance et le premier commutateur associé étant ouvert, tandis que pour les deux autres phases, les premiers commutateurs associés sont fermés en permanence et les deuxièmes commutateurs associés sont ouverts en permanence, et, dans leaquel, entre deux premiers états de commutation (a, c, e), est à chaque fois inséré un deuxième état de commutation (b, d, f) dans lequel, pour l'une des trois phases (U, V, W), le premier commutateur associé est ouvert et fermé périodiquement en alternance et le deuxième commutateur associé est ouvert, tandis que pour les deux autres phases, les deuxièmes commutateurs associés sont fermés en permanence et les premiers commutateurs associés sont ouverts en permanence.

2. Procédé selon la revendication 1, **caractérisé en ce que** dans chaque deuxième état de commutation (b, d, f), un des commutateurs associés à une phase est ouvert et fermé périodiquement en alternance, dans laquelle, ni dans le premier état de commutation (a, c, e) précédent ni dans le premier état de commutation (a, c, e) suivant, l'un des commutateurs associés n'est ouvert et fermé périodiquement en alternance.

3. Procédé selon la revendication 1 ou 2, **caractérisé en ce que** la fraction (α) du temps pendant laquelle le deuxième commutateur ouvert et fermé périodiquement en alternance est fermé pendant la durée de chaque premier état de commutation (a, c, e) est égale à la fraction du temps pendant laquelle le premier commutateur ouvert et fermé périodiquement en alternance est fermé pendant la durée de chaque deuxième état de commutation (b, d, f).

4. Procédé selon l'une des revendications 1 à 3, **caractérisé en ce que** dans chaque deuxième état de commutation (b, d, f), la fraction (α) du temps pendant laquelle le premier commutateur ouvert et fermé périodiquement en alternance est fermé est réglée de manière à être proportionnelle à la charge du moteur (11) à courant continu.

5. Procédé selon l'une des revendications précédentes, **caractérisé en ce que** dans chaque premier état de commutation (a, c, e), la fraction du temps pendant laquelle le deuxième commutateur ouvert et fermé périodiquement en alternance est fermé est réglée de manière à être proportionnelle à la charge du moteur (11) à courant continu.

6. Onduleur **caractérisé par** un circuit de commande (C) qui est configuré pour commander les commutateurs (SU1, SV1, SW1, SU2, SV2, SW2) de l'onduleur à l'aide d'un procédé selon l'une des revendications précédentes.
